# EUROPEAN PATENT SPECIFICATION

(11) **EP 4 339 600 B1**
(45) Date of publication and mention of the grant of the patent: **02.09.2026**
(21) Application number: 22807459.7
(22) Date of filing: 10.05.2022
(51) Int. Cl.: G01N 21/90, B65B 9/213, B65B 31/04, G01N 21/3504, G01N 21/359, G01N 21/39, B65B 9/207, B65B 51/30, B65B 55/18, B65B 57/00, G01N 21/03, G01N 21/84

(54) **PILLOW PACKAGING BAG GAS CONCENTRATION MEASURING METHOD**
GASKONZENTRATIONSMESSVERFAHREN FÜR KISSENVERPACKUNGSBEUTEL
PROCÉDÉ DE MESURE DE LA CONCENTRATION DE GAZ DANS UN SAC D'EMBALLAGE D'OREILLER

(30) Priority: 10.05.2021 JP 2021079435
(43) Date of publication of application: 20.03.2024
(73) Proprietor: General Packer Co., Ltd., Kitanagoya-shi, Aichi 481-8601 (JP)
(72) Inventor: OSHIMA, Masashi, Kitanagoya-shi, Aichi 4818601 (JP); MIYABE, Yuki, Kitanagoya-shi, Aichi 4818601 (JP)
(74) Representative: Cabinet Beau de Loménie
(86) International application number: PCT/JP2022/019763
(87) International publication number: WO 2022/239759

(56) References cited:
- WO-A1-2021/079994
- CN-U- 209 689 846
- JP-A- 2006 055 001
- JP-A- 2012 208 126
- JP-A- 2012 233 701
- JP-A- 2021 067 635
- JP-B2- 3 129 463
- US-A1- 2006 162 290
- US-A1- 2011 134 431
- US-A1- 2014 287 521

## Description

### Technical Field

The present invention relates to a method for measuring the gas concentration of a specific gas remaining in a packaging space of a pillow packaging bag, which has the packaging space partitioned by sealing a long cylindrical packaging material at predetermined intervals.

### Background Art

Japanese Patent No. 3129463 discloses a shrink packaging machine that processes and forms a continuously drawn strip film into a cylindrical packaging material, stores a packaged product in the packaging material, and seals both ends of the packaged product using an end-sealing device. Such a packaging bag in which both ends of the packaged product stored in it are sealed is called a pillow packaging bag. In the above-described shrink device, when the packaging bag is sealed with the end sealing device, gas replacement is performed by filling the packaging bag with nitrogen gas or the like. This allows the quality of the packaged product to be maintained at a high level.

However, when specific gases, such as an oxygen gas, remain in the pillow packaging bag that has been replaced with a nitrogen gas, etc., above a predetermined concentration, the specific gases can prevent the quality of the packaged product from being maintained. Therefore, the residual concentration of the specified gas remaining in the pillow packaging bag needs to be inspected, and the product needs to be discharged from the packaging process on the packaging machine as a defective product when the concentration is above a predetermined level.

In the past, such product inspections were conducted by sampling inspection, in which a predetermined number of samples were taken from multiple pillow packaging bags that had been manufactured, but such sampling inspection, while it is true that the residual gas concentration of a single sample taken can be precisely inspected, it is not possible to inspect all the pillow packaging bags manufactured from a single strip of film. However, such sampling inspection is not accurate enough to inspect the residual gas concentration of a single sample, and only the statistical incidence of defective products is obtained.

Japanese Patent Application Publication, JP-A-2002-208126, discloses a method for measuring gas concentration in a packaging machine, in which a laser-type gas concentration measuring device includes a laser generator having a function of irradiating laser light of a specific wavelength to a specific gas by means of a transmitter, and a laser receiver having a function of receiving the laser light emitted from the transmitter and passing through the specific gas, measuring the intensity of the laser light absorbed by the gas, and delivering a signal indicative of the concentration of the gas based on the intensity. Using the laser gas concentration measuring device described above, a gas purge chamber of the laser gas concentration measuring device with the transmitter and the receiver placed at predetermined intervals is provided in a product discharge path of the packaging machine that fills a pillow packaging bag with the product to be packaged and performs gas replacement before sealing the opening, and the purge gas is caused to flow into the gas purge chamber. The concentration of the specified gas in the pillow packaging bag that passes between the transmitter and the receiver is measured while the purge gas is flowing in the gas purge chamber. This enables the laser gas concentration measuring device provided in the packaging machine to quickly measure the concentration of the specific gas inside all pillow packaging bags without damaging the packaging bags.

US 2011/134431 A1 discloses a method for measuring an inert gas concentration in multiple bags using a laser beam displaceable along a rail, which bags are moved in an intermittent manner (batches of three bags at a time).

Thus, in recent years, a laser gas concentration measuring device has been used to non-destructively inspect all of the pillow packaging bags formed by the packaging machine to improve the inspection accuracy of the gas concentration of the specific gas remaining in the pillow packaging bags.

### Prior Art Document

### Patent Documents

Patent Document 1: Japanese Patent No. 3129463
Patent Document 2: JP-A-2012-208126

### Summary of the Invention

### Problem to Be Overcome by the Invention

However, a first problem with the above gas concentration measurement method is the configuration in which the gas purge chamber filled with the inert gas such as nitrogen gas is provided on the product discharge path of the packaging machine, and the pillow packaging bag passes through the gas purge chamber.

In other words, new space is required in order to provide the gas purge chamber in the limited space near the packaging machine, and the newly provided gas purge chamber needs to be constantly filled with an inert gas. Therefore, a large amount of inert gas is required in addition to the inert gas used to replace the gas in the packaging bag, so that a supply unit needs to be provided to supply the large amount of inert gas to the gas purge chamber.

A second problem is the configuration for improving the measurement accuracy of the laser gas concentration measuring device.

The laser gas concentration measuring device is configured to measure the gas concentration based on the absorbance of the laser light absorbed by the specific gas remaining in the packaging bag when the laser light is transmitted through the packaging bag. Since the absorbance is based on a ratio of molecules of the specific gas existing on an optical path between the laser generator and the laser receiver absorbing a specific spectrum of laser light, it is known that the measurement accuracy can be improved when the molecules existing on the optical path absorb more of the specific spectrum. The method to absorb more of the specific spectrum is to increase the length of the optical path or to increase the irradiation time on the same optical path.

However, the above-described gas concentration measurement method has a difficulty in securing a long optical path in the gas purge chamber, which is located in the limited space on the packaging machine. Furthermore, since the laser generator and the laser receiver are fixed at a certain position in the gas purge chamber, the laser light is only irradiated instantaneously to the passing pillow packaging bag. Since the laser light is only instantaneously irradiated to the passing pillow packaging bag, it is not possible to secure a long irradiation time on the same optical path.

Therefore, an object of the present invention is to provide a method for measuring gas concentration in a pillow packaging bag, which can secure a sufficient irradiation time of laser light to the pillow packaging bag in a normal air atmosphere to improve the measurement accuracy.

### Means for Overcoming the Problem

Claim 1 specifies a method for measuring gas concentration in multiple pillow packaging bags. The pillow type packaging bags are formed by a pillow packaging machine. The pillow packaging machine includes a vertical sealing device that widthwise rolls a long film drawn from a film roll and continuously seals the overlapping ends to form multiple tubular packaging materials; a conveying device provided with a conveyance path that continuously conveys the packaging materials in a longitudinal direction at a predetermined conveying speed; at least one horizontal sealing device that includes a sealer that seals each packaging material across a width thereof, the at least one horizontal sealing device operating the sealer intermittently at a predetermined cycle; a filling device that fills each packaging material with an article to be packaged; and a gas replacement device that replaces an atmosphere of the article filling each packaging material with a predetermined inert gas. The pillow packaging machine executes a first sealing step in which the sealer seals the middle of each packaging material to form a first sealing section and forms a packaging space separated by the first sealing section; a filling step of filling the packaging space with the packaged article fed from the filling device; a gas replacement step of replacing an atmosphere in the packaging space filled with the packaged article with the inert gas; and a second sealing step in which the sealer seals the packaging space to form a second sealing section. The pillow packaging machine forms a series of pillow packaging bags in each of which the packaging space filled with the product to be packaged is sealed with the first and second seals. Near the pillow packaging machine is provided a laser gas concentration measuring device including a laser generator that emits laser light of a specific wavelength into the packaging space and a laser receiver that receives the laser light, the laser gas concentration measuring device transmitting the laser light through the gas-replaced and sealed packaging space, thereby measuring the gas concentration of a specified gas remaining in the packaging space based on an absorption spectrum of the specified wavelength, the absorption spectrum changing before and after the transmission of the laser light through the packaging space. The laser gas concentration measuring device executes a measurement device arranging step of arranging the laser generator and the laser receiver at a predetermined first point opposite to a measurement point provided on the pillow packaging bag formed at the second sealing step; a gas concentration measuring step of emitting laser light to the measurement point while moving the laser generator and the laser receiver from the first point to a predetermined second point in parallel along a transport path at a predetermined moving speed, thereby measuring the gas concentration in the packaging space; and a returning step of returning the laser generator and the laser receiver from the second point to the first point along a predetermined return path. During the gas concentration measurement step, while synchronizing the moving speed of the laser generator and the laser receiver with the conveying speed of the pillow packaging bag, the laser gas concentration measuring device measures the gas concentration in the packaging space in accordance with the pillow packaging bag so that the laser generator and the laser receiver stop relative to the measurement point.

The method specified in claim 2 is characterized in that in the invention specified in claim 1, the return path is configured to draw a substantially U-shaped trajectory on the anti-conveyance path side with the second point as a starting point and the first point as an ending point.

The method specified in claim 3 is characterized in that in the invention specified in claim 1, the pillow packaging bags conveyed by the conveying device are formed from the packaging material to be interconnected and are continuous in a longitudinal direction.

The method specified in claim 4 is characterized in that in the invention specified in claim 1, the pillow packaging bags conveyed by the conveying device are formed from the packaging material to be interconnected and are continuous in a transverse direction.

The method specified in claim 5 is characterized in that in the invention specified in claim 3 or 4, the measurement point is provided along a width direction of the pillow packaging bag so that the laser light passes through the measurement point.

The method specified in claim 6 is characterized in that in the invention specified in claim 3 or 4, the measurement point is provided along a thickness direction of the pillow packaging bag so that the laser light passes through the measurement point.

The method specified in claim 7 is characterized in that in the invention specified in claim 1, the pillow packaging machine is provided with a discharge passage which is located near the pillow packaging machine and along which the pillow packaging bags formed by the pillow packaging machine are discharged, and the laser gas concentration measuring device is located in the middle of the discharge passage outside the pillow packaging machine.

### Effect of the Invention

In the above-described method according to the invention, the moving speed at which the laser generator and the laser receiver, both making up the laser gas concentration measuring device, move during the measurement of the gas concentration is synchronized with the conveyor speed at which the conveyor conveys the pillow packaging bags, so that the laser generator and the laser receiver stop relative to the measurement point on each pillow packaging bag. Furthermore, the distance between the laser generator and the laser receiver is kept constant across the measurement point during the gas concentration measurement. In other words, the gas concentration measurement is performed while the laser generator and the laser receiver are moved together with the measurement point provided on each pillow packaging bag with the optical path length being kept constant.

This allows the laser light to be irradiated over an extended period of time on the same optical path, thus ensuring sufficient irradiation time of the laser light to the pillow packaging bag in an air atmosphere and improving the measurement accuracy.

The laser generator and the laser receiver draw a substantially U-shaped trajectory on the anti-conveyance path side with the second point as the starting point and the first point as the end point as the return path when returned from the second point to the first point after completion of the measurement.

This allows the laser generator and the laser receiver to be separated from the pillow packaging bags during non-measurement time, making it difficult for the laser generator and the laser receiver to interfere with other equipment on the pillow packaging machine and to avoid being caught in the flow of the outgoing pillow packaging bags, thereby improving safety.

Furthermore, regardless of whether the pillow packaging bags are arranged in the vertical or horizontal direction, the moving speed of the laser generator and the laser receiver during the gas concentration measurement is synchronized with the conveyance speed of the pillow packaging bags. Furthermore, the laser light is caused to transmit through the measurement point in the width or thickness direction, so that, in either case, the laser generator and the laser receiver are moved together with the optical path with the optical path length between the laser generator and the laser receiver being kept constant, whereby the measurement can be performed for a long period of time on the same optical path.

This allows the laser gas concentration measuring device to be freely installed in accordance with the layout of the pillow packaging machine, improving design freedom and versatility.

Furthermore, the laser gas concentration measuring device is provided in the middle of the carry-out passage along which the formed pillow packaging bags are carried outside the pillow packaging machine, to measure the gas concentration.

As a result, the laser gas concentration measuring device can be installed near the pillow packaging machine, or it can be installed in the middle of the delivery path outside the pillow packaging machine, so that the laser gas concentration measuring device can be installed freely in accordance with the layout of the pillow packaging machine, with the result of improvements of the degree of freedom and versatility of design.

### Brief Description of the Drawings

Fig. 1 is an illustrative diagram schematically showing the gas concentration measurement method for pillow packaging bags in a first embodiment.
Fig. 2 is an illustrative diagram schematically showing the configuration of the laser gas concentration measuring device in the method for measuring gas concentration in a pillow packaging bag according to the first embodiment.
Fig. 3 is an illustrative diagram schematically showing the configuration of the gas concentration measurement method for pillow packaging bags according to a second embodiment.
Fig. 4 is an illustrative diagram schematically showing the gas concentration measurement method for a pillow bag according to a third embodiment.
Fig. 5 is an illustrative diagram schematically showing the gas concentration measurement method for a pillow packaging bag according to a fourth embodiment.

### Best Mode for Carrying Out the Invention

### First Embodiment

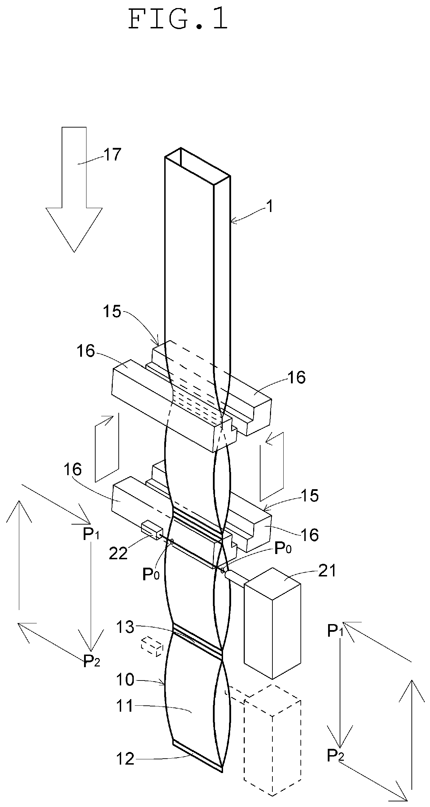

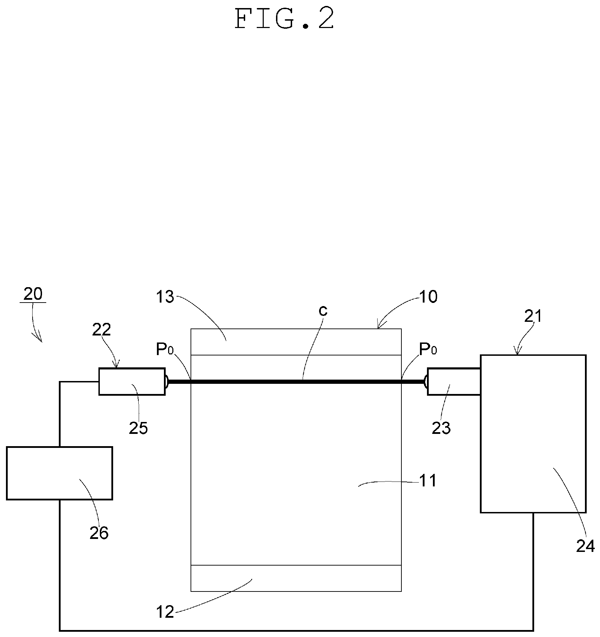

A first embodiment of the gas concentration measuring method for the pillow packaging bag according to the present invention will be described with reference to the accompanying drawings. Fig. 1 is an illustrative diagram schematically showing the gas concentration measuring method for the pillow packaging bag according to the first embodiment. Fig. 2 is an illustrative diagram schematically showing the configuration of the laser gas concentration measuring device according to the first embodiment.

A pillow packaging bag 10 comprises a tubularly formed packaging material 1. The packaging material 1 is formed into a cylindrical shape by rolling or folding a long film drawn from a film roll in the width direction and continuously sealing both widthwise edges of the overlapped film by a longitudinal sealing device (not shown).

As shown in Fig. 1, the packaging material 1 is conveyed by a conveyor device (not shown) along a conveyance path 17 indicated by the arrow in the figure in a longitudinal direction. A transverse sealing device 15 has two sealers 16 with welding portions opposite to each other. The sealers 16 are configured to intermittently grip and seal the packaging material 1 being conveyed in a predetermined cycle across a width direction of the packaging material 1. This allows forming the pillow packaging bag 10 with sealing portions 12 and 13 at predetermined intervals along the conveyance path 17 for the packaging material 1 and a packaging space 11 that can be filled with a packaged product, which is divided by the sealed portions.

Along the conveyance path 17 of the packaging material 1, the lower portion of the packaging space sealed first is referred to as the first sealing portion 12, and the upper portion of the packaging space sealed later is referred to as the second sealing portion 13. As shown in Fig. 1, a pillow packaging machine that forms a series of 10 pillow packaging bags in a vertical direction is referred to as a vertical pillow packaging machine.

In the embodiment, as shown in Fig. 1, two horizontal sealing devices 15 alternately and cyclically seal the packaging material 1 at predetermined intervals to form continuous pillow packaging bags 10 by jointly forming the first sealing portion 12 and the second sealing section 13 between one packaging space 10 and the other packaging space 10.

Furthermore, as shown in Fig. 1, a laser gas concentration measuring device 20 is disposed in the lower vicinity of the horizontal sealing device 15.

The laser gas concentration measuring device 20 has a laser generator 21 and a laser receiver 22 positioned across the pillow packaging bag, as shown in Figs. 1 and 2.

The laser generator 21 has a laser light source 23 and a control unit 24 that sets the wavelength of laser light emitted from the light source 23 to a specific one and adjusts the laser light to a predetermined light intensity, as shown in Fig. 2.

The laser light source 23 has a semiconductor laser element comprising a diode with a tunable wavelength and is formed to emit laser light in the near-infrared region. The semiconductor laser element in the embodiment is a high power semiconductor laser element called a DFB (Distributed Feed Back) laser.

The control unit 24 is configured to adjust the wavelength of the laser light emitted from the semiconductor laser element to a specific wavelength specific to the specific gas to be measured and to control amplification so that the laser light is emitted at a specified incident light intensity. The control unit 24 is also configured to deliver an incident light signal pertaining to the intensity of the incident light to be emitted to the measuring unit 26.

The specific gas to be measured by the laser gas concentration measuring device 20 in the embodiment is oxygen gas (O₂) . An absorption wavelength band unique to the oxygen gas is the 760 nm band, and the specific wavelength pertaining to one of the multiple absorption spectra in the absorption wavelength band is selected as the output wavelength of the laser light. In the embodiment, the system is configured to detect oxygen gas that may degrade the packaged product due to oxidation, but the detecting manner should not be limited to this, and the absorption spectrum pertaining to the absorption wavelength band that identifies the gas to be detected can be set arbitrarily.

As shown in Fig. 2, the laser light receiver 22 has a light-receptive sensor 25 that receives the attenuated laser light transmitted through the pillow packaging bag 10 and a measuring unit 26 that measures the gas concentration based on the received signal from the light-receptive sensor 25.

The light-receptive sensor 25 comprises an element, such as a photodiode, that converts the light transmitted through the pillow packaging bag 10 to an electrical light signal. This allows the intensity of the laser light transmitted through the packaging space 11 of the pillow packaging bag 10 and attenuated to be processed electrically.

The measuring unit 26 is configured to calculate the transmittance based on the transmitted light signal pertaining to the intensity of the transmitted light and an incident light signal pertaining to the intensity of the incident laser light delivered from the control unit 24 of the laser generator 21, to obtain the absorbance of the laser light by a specific gas based on the calculated transmittance and to measure the concentration of the specific gas in the packaging space 11 based on the obtained absorbance.

The path that the laser light travels between the laser generator 21 and the laser receiver 22 is defined as an optical path c, and its length is the optical path length. On the optical path c are an air atmosphere and the packaging space 11 of the pillow packaging bag 10.

The specific gas is present in the air atmosphere and remains in the packaging space 11. The specific gas absorbs, on the optical path c, the laser light with a predetermined absorption spectrum pertaining to the specific wavelength of the laser light. Therefore, the laser light is absorbed by the specific gas on the optical path c thereby to be attenuated. The laser light attenuated on the optical path c is received by the light-receptive sensor 25.

The measuring unit 26 is configured to obtain the transmittance from the intensity of light before attenuation obtained from the control unit 24 and the intensity of light that has been transmitted and attenuated. The measuring unit 26 is also configured to obtain the absorbance, which indicates how much light has been absorbed by the specific gas on the optical path c, from the obtained transmittance. The measuring unit 26 is further configured to calculate the total concentration of the specific gas on the optical path c based on the calculated absorbance, and to measure the concentration of the specific gas remaining in the packaging space 11 by excluding, from the total concentration, the effect of the concentration of the specific gas existing at a substantially constant concentration in the air atmosphere.

When the measured concentration of the remaining specific gas is at or above a predetermined threshold, it is determined that the specific gas, oxygen gas in the embodiment, having a concentration equal to or above an acceptable one remains in the packaging space 11, so that bagged products manufactured by packaging the products to be packaged in the 10 pillow packaging bags are determined to be defective and are discharged out of the conveyance path.

The laser gas concentration measuring device 20 measures the gas concentration of the specific gas based on the degree of attenuation of the laser light absorbed and attenuated by the specific gas on the optical path c.

Therefore, the measurement accuracy can be improved firstly by securing a longer optical path length and increasing the degree of attenuation of the laser light. This can be achieved by securing a longer measurement time when the optical path length is constant, and by reflecting the laser light emitted from the laser generator multiple times during the measurement time and having the laser light received by the laser receiving unit.

Secondly, the measurement accuracy can be improved by emitting laser light multiple times and measuring the concentration multiple times. This can be done by maintaining a constant optical path length and ensuring a long measurement time, emitting laser light from the laser generator multiple times during the measurement time, calculating measurement error from the results of multiple measurements, and feeding the measurement error back to the actual measurement value to calculate a measurement value excluding the error. In either case, it is important to ensure a long measurement time to improve the measurement accuracy and to keep the optical path length long and constant during the measurement time.

The pillow packaging bag 10 accepting the above laser gas concentration measuring device 20 has measurement points P0 through which the laser light can pass, as shown in Fig. 1.

The pillow packaging bag 10 is composed of a predetermined film as described above. The film is preferably made of a synthetic resin such as vinyl chloride, polyethylene, polypropylene, or the like with a laser light transmittance of more than 0.00001% and less than 100%. In other words, the laser gas concentration measuring device 20 according to the present embodiment is effective even when the pillow packaging bag 10 is colored, as long as the laser light is transmitted therethrough. Furthermore, even when the film is colored, windows through which the laser light can pass may be provided at the positions of the measurement points P0 when the pillow packaging bag 10 is formed from the packaging material 1.

An optical path in the packaging space 11 at the measurement points P0 is formed in a space above the pillow packaging bag 10 where the packaged material does not interfere with the laser light, as shown in Fig. 1. This can prevent measurement errors from occurring due to absorption and scattering of the laser light by the packaged object.

The vertical pillow packaging machine having the above configuration is configured to fill the pillow packaging bag 10 with the packaged material through the processes described below, and to inspect each packaged material with a laser type gas concentration measuring device 20.

A conveying device (not shown) for conveying the packaging material 1 is configured to convey the packaging material 1 and the pillow packaging bag formed from the packaging material 1 along the conveyance path 17 at a predetermined conveying speed.

This enables the vertical pillow packaging machine to continuously produce and carry out the bag product in which the pillow packaging bag formed from the packaging material 1 is filled with the product to be packaged.

As shown in Fig. 1, the transverse sealing device 15 is configured to continually form the pillow packaging bags 10 from the packaging material 1 by performing two sealing processes in a single step.

A first sealing process is to seal the middle of the packaging material 1 to form the first sealing portion 12, and a second sealing process is to seal the packaging space 11 filled with the product to be packaged to form the second sealing portion 13. As shown in Fig. 1, in the second sealing process, when the sealers 16 of the horizontal sealing device 15 form the second sealing portion 12 of the packaging space 11 and seal the previous pillow packaging bag 10, the sealers 16 are configured to form the first sealing portion 12 of the subsequent pillow packaging bag 10 thereby to form the packaging space 11.

In the embodiment, as shown in Fig. 1, two horizontal sealing devices 15 are configured to form the pillow packaging bags 10 continuously from a cylindrical packaging material 1 by alternately repeating a sealing process in which the first and second sealing processes are performed simultaneously on the conveyance path 17.

As shown in Fig. 1, each horizontal sealing device 15 is configured so that each sealer 16 moves a predetermined distance along the conveyance path 17 while clamping the packaging material 1. This allows each sealer 16 a predetermined sealing time to weld the packaging material 1. the seal starting position by a box motion in which each sealer 16 draws a substantially U-shaped trajectory toward the anti-conveyance path 17 side away from the conveyance path 17 along which the pillow packaging bag 10 is conveyed, with the starting point corresponding to the position at the end of sealing and the ending point corresponding to the position at the start of sealing. Thus, as shown in Fig. 1, multiple horizontal sealing devices 15 can each operate in a circular orbit on the same track to continuously form the pillow packaging bags 10 without stopping the packaging material 1.

After the first sealing process, the pillow packaging bag 10 is subjected to a filling process in which the packaging space 11 is filled with the packed product, a gas replacement process in which the atmosphere in the packaging space 11 is replaced with an inert gas. The pillow packaging bag 10 may further be subjected to a degassing process in which the atmosphere in the packaging space 11 is degassed, and a vibration process in which the packed product in the packaging space 11 is vibrated.

The filling process is a process of filling the packaging space 11, which is divided in the middle of the tubular packaging material 1 by the first sealing portion 12, with the packaged product.

The gas replacement process is a process in which the air atmosphere of the packaged product filled into the packaging space 11 is replaced with an inert gas.

The filling process may be performed simultaneously with the gas replacement process, or the filling process and the gas replacement process may be performed in sequence. The inert gas used in the gas replacement process is, for example, nitrogen gas or carbon dioxide gas, which can be selected as desired.

Depending on the product to be packaged, the degassing process may be performed simultaneously with the filling process or between the filling process and the gas replacement process. The vibration process may be performed in parallel with the filling and gas replacement processes. The vibration process can further deaerate the packaging space 11 and organize the packaged product downward.

When the filling process and the other processes described above are completed, a second sealing process is performed to form the second sealing portion that seals the packaging space 11.

Thus, a pillow packaging bag 10 in which the packaging space 11 filled with the packaged product is sealed with the first and second sealing portions is formed, and the process moves to an inspection process as shown in Fig. 1.

Thus, the vertical pillow packaging machine forms cylindrical packaging materials 1 from a long film, and through each process, the pillow packaging bags 10 respectively filled with the products to be packaged are formed. Since the vertical pillow packaging machine is already known widely and publicly, including a shrink packaging device disclosed in Japanese Patent No. 3129463, which has been cited as a prior art document, a detailed description and illustration of the details of each part configuration are omitted.

The inspection process performed by the laser gas concentration measuring device 20 includes a measuring device placement process, a gas concentration measuring process, and a return process.

The measuring device placement process is a process of placing the laser generator 21 and the laser receiver 22 in a predetermined position. As shown in Fig. 1, with respect to any one of the multiple pillow packaging bags 10 continuous below the sealers 16 of the horizontal sealing device 15, the laser generator 21 and the laser receiver 22 are opposed to the measurement points P0 of the pillow packaging bag 10 and face each other with the pillow packaging bag 10 in between. This position will hereinafter be referred to as a first point P1.

When a direction in which the sealers 16 of the horizontal sealing device 15 lodge the packaging material 1 therebetween to seal it is referred to as a width direction of the pillow packaging bag 10, and the direction orthogonal to the width direction is referred to as a thickness direction of the pillow bag 10, then the positions of the first point P1 and the measurement points P0 are along the width direction of the pillow bag 10, as shown in Fig. 1.

After the laser generator 21 and the laser receiver 22 are positioned at the first point P1, the process moves on to the next gas concentration measurement process.

The gas concentration measurement process is a process in which laser light is emitted from the laser generator 21 located at the first point P1 to the measurement points P0, P0, and the laser light attenuated in the packaging space 11 is received by the laser receiver 22 so that the gas concentration of the specific gas remaining in the packaging space 11 is measured. The laser generator 21 and the laser receiver 22 are configured to be moved, in the gas concentration process, at the same travel speed as the conveyance speed at which the packaging material 1 and the pillow packaging bag 10 are conveyed on the conveyance path 17. This allows the laser generator 21 and the laser receiver 22 to continue emitting laser light to the measurement points P0 even while the pillow packaging bag 10 is being conveyed, since the laser generator 21 and the laser receiver 22 are stopped relative to the pillow packaging bag 10.

The gas concentration measurement process ends when the predetermined measurement time expires. In this case, a stop position of the laser generator 21 and the laser receiver 22, which have moved together with the pillow packaging bag 10 to be measured, is referred to as a second point P2.

The measurement time should be as long as the sealing time of the horizontal sealing device 15. As the result of this configuration, measurement can be started after the release of the pillow packaging bag 10 released from the sealers 16, and the subsequent measurement can be started without delay when the subsequent pillow packaging bag 10 is released from the sealers 16. When multiple sets of the laser generator 21 and the laser receiver 22 are provided, the measurement time is not restricted to the sealing time but can be set arbitrarily.

A trajectory drawn by the laser generator 21 and the laser receiver 22 between the first and second points P1 and P2 follows the conveyance path 17 of the pillow bag 10, as shown in Fig. 1, and the laser generator 21 and the laser receiver 22 are configured to be moved parallel to each other directly below the horizontal sealing device 15 relative to an axis of the conveyance path 17 in the direction that the packaging material 1 droops from the center of the sealers 16. This allows the distance between the laser generator 21 and the laser receiver 22, i.e., an optical path length, to be kept constant, even when the pillow packaging bag 10 is biased toward either the laser generator 21 or the laser receiver 22, thereby reducing measurement error.

According to the gas concentration measurement process configured as described above, the laser generator 21 and the laser receiver 22, which move together with the pillow packaging bag 10, can continue to transmit laser light into the packaging space 11 through the measurement points P0 that move during the conveyance process. The optical path length between the laser generator 21 and the laser receiver 22 can be kept constant during the conveyance process. Therefore, regardless of whether or not the laser light is reflected or emitted multiple times, the optical path length can be kept constant to ensure a long measurement time, thereby improving the accuracy of gas concentration measurement by the laser gas concentration measuring device 20.

The laser generator 21 and laser receiver 22 reach the second point P2 upon lapse of the measurement time, so that the gas concentration measurement process ends, and the system moves to the subsequent return process.

The return process is a process of returning the laser generator 21 and the laser receiver 22 from the second point P2 to the first point P1. As shown in Fig. 1, the laser generator 21 and the laser receiver 22 are configured to move away from the second point P2 so that they are opposite each other and to return from the second point P2 to the first point P1 while drawing the substantially U-shaped trajectory with the second point P2 as a start point and the first point P1 as an end point to the anti-conveyance path 17 side. In other words, the laser generator 21 and the laser receiver 22 are configured to draw the rectangular-shaped trajectory called the box motion in the gas concentration measurement process and the return process together. This prevents the laser generator 21 and the laser receiver 22 from being caught in the flow of the packaging material 1 and the pillow packaging bag 10 and prevents them from interfering with the sealers 16 of the horizontal sealing device 15, which are also operating in box motion.

Furthermore, although the embodiment exemplifies the laser gas concentration measuring device 20 provided with one pair of the laser generator 21 and the laser receiver 22, the laser gas concentration measuring device 20 should not be limited to the configuration and may be provided with multiple pairs of the laser generators and the laser receivers.

In the embodiment, the laser generator 21 and the laser receiver 22 are configured to operate in the box motion as described above, so that when multiple pairs of the laser generators 21 and the laser receivers 22 are incorporated in the laser gas concentration measuring device, the subsequent laser generator 21 and laser receiver 22 can be kept on standby near the first point P1. This allows continuous, uninterrupted measurement of the pillow packaging bag 10 that is released from the sealers 16 of the horizontal sealing device 15 one after another. This can increase the speed of the operation of the vertical pillow packaging machine, including that in the inspection process and improve the inspection and manufacturing efficiencies of the pillow packaging bags 10.

Similarly, when the laser generator 21 and the laser receiver 22 are configured as described above, it is not necessary to have a one-to-one correspondence between one sealing time and one measuring time as described above, but rather, multiple sealing times can be elapsed for one measuring time. This allows the optical path length to be maintained at a constant length to ensure a long measurement time, thereby improving the accuracy of gas concentration measurement by the laser gas concentration measuring device 20.

In the embodiment, the laser generator 21 and laser receiver 22 are configured to operate in the box motion, but this is not limited to this. Or, the laser generator 21 and laser receiver 22 may be operated so as to draw a substantially semicircular trajectory with the second point as the start point and the first point P1 as the end point, or a stopping process may be provided between the conveying processes and the laser generator 21 and the laser receiver 22 may be operated to return along the path traveled in the gas concentration measurement process from the second point P2 to the first point P1 during the stopping process.

### Second Embodiment

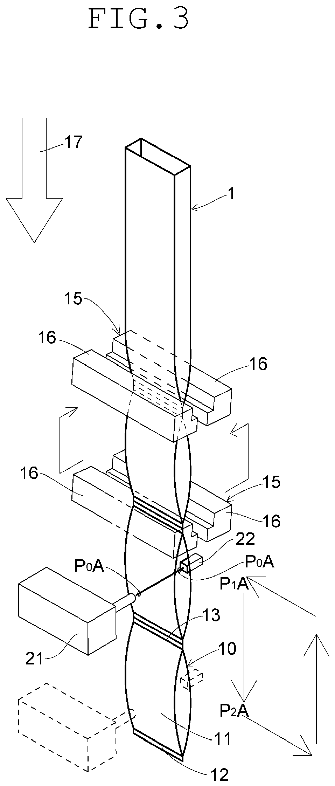

Next, a second embodiment of the method for measuring gas concentration in a pillow packaging bag will be described with reference to the attached drawings. Fig. 3 is an illustrative diagram schematically showing the configuration of the gas concentration measurement method for pillow packaging bags according to the second embodiment.

The configurations of the pillow packaging machine and the laser gas concentration measuring device 20 in the second embodiment are the same as those in the first example, so that the explanation of the pillow packaging machine and the laser gas concentration measuring device is omitted.
On the other hand, the differences between the configuration of the first and second embodiments are the positions of the measurement points P0A on the pillow packaging bag and the orientation of the laser generator 21 and laser receiver 22 with respect to the pillow packaging bag 10.

When the direction in which the sealers 16 of the horizontal sealing device 15 sandwich and seal the packaging material 1 is a width direction of the pillow packaging bag 10 and the direction orthogonal to the width direction is a thickness direction of the pillow packaging bag 10, then in the measurement device placement process according to the first embodiment, the measurement points P0 and the first point P1 opposite to the measurement points P0 are located along the width direction of the pillow packaging bag 10, as shown in Fig. 1.

In contrast, in the measurement device placement process in the second embodiment, the positions of the measurement points P0A and the first point P1A opposite to the measurement points P0A are provided along the thickness direction of the pillow packaging bag 10, as shown in Fig. 3. The second point P2A and the return path are accordingly set.

### Third Embodiment

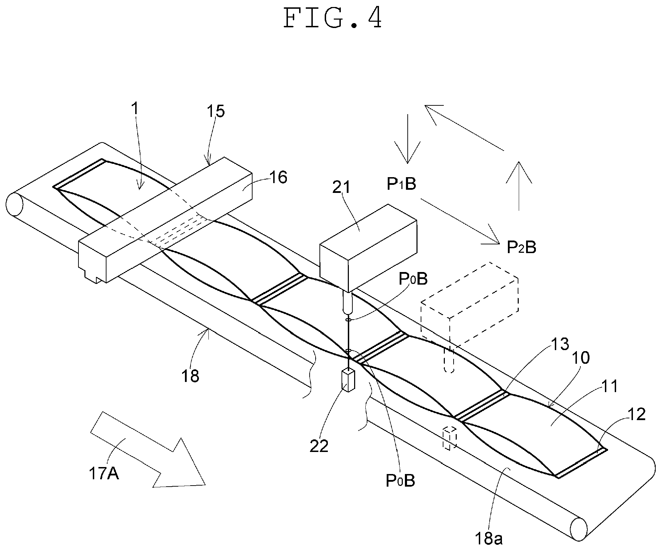

Next, a third embodiment of the method for measuring gas concentration in a pillow packaging bag will be described with reference to the attached drawings. Fig. 4 is an illustrative diagram schematically showing the gas concentration measurement method for a pillow bag according to a third embodiment. The configuration of the laser gas concentration measuring device 20 in the third embodiment is the same as in the first and second embodiments, so that the explanation of the laser gas concentration measuring device is omitted.

On the other hand, the configuration of the pillow packaging machine in the third embodiment differs from those of the first and second embodiments.

The pillow packaging machine in the third embodiment is configured to form a series of pillow packaging bags 10 in a horizontal direction, as shown in Fig. 4, and is referred to as a horizontal pillow packaging machine.

As shown in Fig. 4, the horizontal pillow packaging machine is conveyed by a conveying device equipped with a belt conveyor 18 along a conveyance path 17a indicated by the arrow in the figure in the longitudinal direction. The horizontal pillow packaging machine is configured so that the sealer 16 of the horizontal sealing device 15 intermittently seals the packaging material 1 being conveyed in a predetermined cycle across the width direction of the packaging material 1, and then the formed pillow packaging bag 10 is placed on the belt conveyor 18 to be carried out in a horizontal direction. Along the conveyance path 17a for the packaging material 1, a forward portion of the packaging space 11 sealed first is referred to as a first sealing portion 12, and a rear portion of the packaging space 11 sealed later is referred to as a second sealing portion 13. The pillow packaging machine is used to form a series of pillow packaging bags 10 in the horizontal direction as shown in Fig. 4. The pillow packaging machine that forms a series of pillow packaging bags 10 in the horizontal direction is called a horizontal pillow packaging machine, as shown in Fig. 4.

The belt conveyor 18 includes a belt that can transmit laser light, for example, a transparent synthetic resin belt. Preferably, a window section through which the laser light can be transmitted may be provided in the center of the belt. This allows the laser gas concentration measuring device 20 to transmit laser light by positioning the laser generator 21 and the laser receiver 22 as shown in Fig. 4 relative to the pillow packaging bag 10 being conveyed on a placement surface 18a of the belt conveyor 18.

Compared to the vertical pillow packaging machine, the horizontal pillow packaging machine is effective when sufficient height cannot be secured at an installation site of the packaging machine, because the height of the machine can be kept low. In addition, since the formed pillow packaging bag 10 is carried out horizontally, the product can be prevented from being biased in the packaging space 11 when the bag is filled with a product to be packaged that does not want to be tilted. When some manual work is performed on the pillow packaging bag 10, the work can be performed on a table connected to the conveyor belt 18, thus reducing the burden on the operator.

Although the conveying device including the belt conveyor 18 is incorporated into the horizontal pillow packaging machine in the embodiment, the invention should not be limited to the embodiment. For example, the same configuration as in the third embodiment is possible when a carry-out device comprising a belt conveyor 18 and equipped with a carry-out path for carrying out the manufactured pillow packaging bags in a horizontal direction is provided directly below the outside of the vertical pillow packaging machine as shown in the first or second embodiment, and the laser gas concentration measuring device described above is provided in the middle of the carry-out path.

In other words, in addition to the configuration of incorporating the laser gas concentration measuring device 20 inside the horizontal pillow packaging machine as shown in the third embodiment, the vertical pillow packaging machine and the carry-out device can be combined, or the carry-out device can be connected to the conveyance path 17a of the horizontal pillow packaging machine, and the vertical or horizontal pillow packaging machine or the laser gas concentration measuring device can be installed on the outside of the machine. The laser gas concentration measuring device 20 can be freely installed according to the layout of the pillow packaging machine with the result of improvement in the design flexibility and versatility.

The inspection process of the laser gas concentration measuring device 20 for the horizontal pillow packaging machine configured as described above has a measuring device placement process, a gas concentration measuring process, and a return process, as in the first or second embodiment. The process of packaging the product to be packaged in the pillow packaging bag 10 is the same as in the first embodiment except for the process performed by the conveying device, so that the description is omitted.

The conveying device is configured to alternately perform a conveying process in which the packaging material 1 and the pillow packaging bag 10 formed from the packaging material 1 are conveyed along the conveyance path 17a of the packaging material 1 on the belt conveyor 18, and a stopping process in which the conveying process is stopped. Unlike the first or second embodiment, the horizontal sealing device 15 in the embodiment has one sealer 16, as shown in Fig. 4.

When the belt conveyor 18 is stopped during the stopping process, the sealer 16 is configured to descend against the placement surface 18a of the belt conveyor 18 to press down and seal the packaging material 1. Therefore, each time the stopping process stops at predetermined intervals, the sealer 16 can periodically seal the packaging material 1, and the first sealing process and the second sealing process described above in the first embodiment are performed. This can form the pillow packaging bag 10 with the packaging space 11 divided by the first and second sealing portions 12 and 13.

When the sealer 16 is then raised and the pillow packaging bag 10 is released and transferred back to the conveying process, the pillow packaging bag 10 is transferred to the inspection process, which includes the measurement device placement process, the gas concentration measurement process, and the return process.

The measurement device placement process is a process of placing the laser generator 21 and the laser receiver 22 in a predetermined position. As shown in Fig. **4****,** with respect to any one of the multiple pillow packaging bags 10 continuous on the side of the sealer 16 of the horizontal sealing device 15, the laser generator 21 and the laser receiver 22 are opposed to the measurement points P0B of the pillow packaging bag 10 and face each other with the pillow packaging bag 10 in between. This position will hereinafter be referred to as a first point P1B.

When the direction in which the sealer 16 of the horizontal sealing device 15 sandwiches and seals the packaging material 1 is the width direction of the pillow bag 10 and the direction orthogonal to the width direction is the thickness direction of the pillow packaging bag 10, the positions of the first point P1B and the measurement points P0B, P0B are along the thickness direction of the pillow bag 10, as shown in Fig. 4.

In the case of the horizontal pillow packaging machine, when the pillow packaging bag 10 placed on the conveyor belt 18 is filled with a liquid or powder/pellets, the liquid or powder/pellets will accumulate in a lower interior of the pillow packaging bag 10 due to the action of gravity. Therefore, as shown in Fig. **4****,** when the laser generator 21 and the laser receiver 22 are arranged so as to face each other in the vertical direction with the pillow packaging bag 10 in between, there is a risk that the packaged goods may obstruct the laser light within the packaging space 11. Therefore, it is preferable that the packaged material to be packaged in the pillow packaging bag 10 in the third embodiment is a liquid or powder or granular material placed in a tray, capsule, or the like. By packaging and sealing the tray or capsule, etc. with the packaging material 1, it is possible to prevent the packaged object from being placed between the measurement points P0B in the packaging space 11, thus ensuring the optical path c of the laser light.

The process moves to the subsequent gas concentration measurement process after the laser generator 21 and the laser receiver 22 have been placed at the first point P1B.

The gas concentration measurement process is a process in which laser light is emitted from the laser generator 21 located at the first point P1B to the measurement points P0B, and the laser light attenuated in the packaging space 11 is received by the laser receiver 22 so that the gas concentration of the specific gas remaining in the packaging space 11 is measured. The laser generator 21 and the laser receiver 22 are configured to be moved, in the gas concentration process, at the same travel speed as the conveyance speed at which the packaging material 1 and the pillow packaging bag 10 are conveyed by the belt conveyor 18. This allows the laser generator 21 and the laser receiver 22 to continue emitting laser light to the measurement points P0B even while the pillow packaging bag 10 is being conveyed, since the laser generator 21 and the laser receiver 22 are stopped relative to the pillow packaging bag 10.

The gas concentration measurement process ends when the conveying process of the belt conveyor 18 is completed and the packaging material 1 and the pillow packaging bag are moved to the stopping process where they are stopped. The stopping position of the laser generator 21 and laser receiver 22, which have moved together with the pillow packaging bag 10 to be measured, is referred to as a second point P2B.

The trajectory drawn by the laser generator 21 and laser receiver 22 between the first point P1B and the second point P2B is configured so that the laser generator 21 and the laser receiver 22 are parallel to each other above and below the axis of the placement surface 18a of the belt conveyor 18 along the conveyance path 17a of the pillow packaging bag 10, as shown in Fig. 4. This allows the laser generator 21 and the laser receiver 22 to emit laser light to the pillow packaging bag even when the pillow packaging bag 10 is biased toward either side of the placement surface 18a.

According to the gas concentration measurement process configured as described above, the laser generator 21 and the laser receiver 22, which move together with the pillow packaging bag 10, can continue to transmit laser light into the packaging space 11 through the measurement points P0 that move during the conveyance process. The optical path length between the laser generator 21 and the laser receiver 22 can be kept constant during the conveyance process. Therefore, regardless of whether or not the laser light is reflected or emitted multiple times, the optical path length can be kept constant to ensure a long measurement time, thereby improving the accuracy of gas concentration measurement by the laser gas concentration measuring device 20.

The laser generator 21 and laser receiver 22 reach the second point P2B upon lapse of the measurement time, so that the gas concentration measurement process ends, and the system moves to the subsequent return process.

The return process is a process of returning the laser generator 21 and the laser receiver 22 from the second point P2B to the first point P1B. As shown in Fig. **4****,** the laser generator 21 and the laser receiver 22 are configured to move away from the second point P2B so that they are opposite each other and to return from the second point P2B to the first point P1B while drawing the substantially U-shaped trajectory with the second point P2B as a start point and the first point P1 as an end point to the anti-conveyance path 17 side. In other words, the laser generator 21 and the laser receiver 22 are configured to draw the rectangular-shaped trajectory called the box motion in the gas concentration measurement process and the return process together.

On the other hand, the laser receiver 22 is configured to move back on the path it has traveled in the gas concentration measurement process described above from the second point P2B to the first point P1B during the stopping process of the belt conveyor 18.
This prevents the laser generator 21 and laser receiver 22 from being caught in the flow of the packaging material 1 and the pillow packaging bags.

Although configured to operate in the box motion in the embodiment, the laser generator 21 should not be limited to the configuration. The laser generator 21 may be caused to operate in a substantially semicircular trajectory starting at the second point P2B and ending at the first point P1B, and the laser receiver 22 may also be configured to return in the box motion like the laser generator 21.

When both the laser generator 21 and the laser receiver 22 are configured to operate in the box motion together, the laser generator 21 and the laser receiver 22 should not be limited to the above case where the transfer process and gas concentration measurement process correspond one-to-one. The laser gas concentration measuring device 20 equipped with multiple pairs of laser generators 21 and laser receivers 22 may be configured to extend the measurement time by performing the gas concentration measuring process while the conveying process and stopping process are repeated several times. When multiple sets of laser generator 21 and laser receiver 22 are incorporated in the laser gas concentration measuring device 20, the next laser generator 21 and laser receiver 22 can be placed on standby near the first point P1B. This makes it possible to continuously measure the pillow packaging bags 10 that are carried out one after another from the horizontal sealing device 15, regardless of the stop time of the belt conveyor 18. Therefore, the speed of the pillow packaging machine can be increased, and furthermore, the inspection and manufacturing efficiencies of the pillow packaging bags 10 can be improved.

### Fourth Embodiment

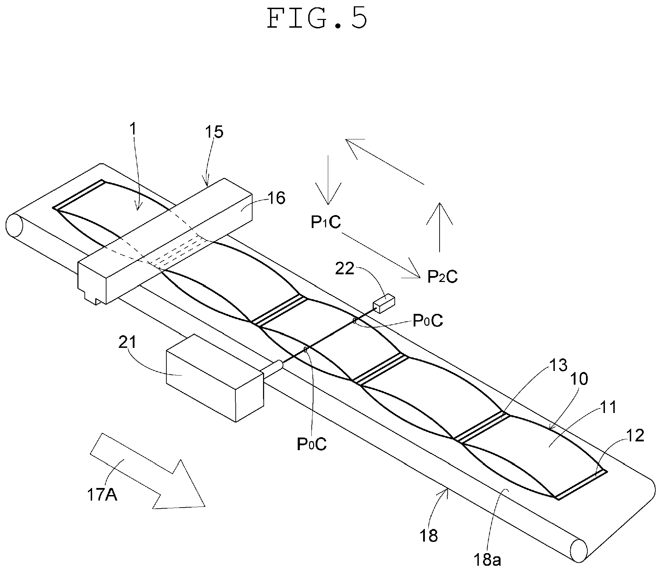

Next, a fourth embodiment of the method for measuring gas concentration in a pillow packaging bag will be described with reference to the attached drawings below. Fig. 5 is an illustrative diagram schematically showing the gas concentration measurement method for a pillow packaging bag according to the fourth embodiment.

The configurations of the pillow packaging machine and the laser gas concentration measuring device 20 in the fourth embodiment are the same as those in the third embodiment, so that the explanation is omitted.

On the other hand, the differences between the configuration of the third and fourth embodiments are the position of the measurement points P0C, P0C on the pillow packaging bag 10 and the orientation of the laser generator 21 and laser receiver 22 with respect to the pillow packaging bag 10.

When the direction in which the sealer 16 of the horizontal sealing device 15 sandwiches and seals the packaging material 1 is a width direction of the pillow packaging bag 10 and the direction orthogonal to the width direction is a thickness direction of the pillow packaging bag 10, then in the measurement device placement process according to the third embodiment, the measurement points P0B and the first point P1B opposite to the measurement points P0B are located along the thickness direction of the pillow packaging bag 10, as shown in Fig. 4.

In contrast, in the measurement device placement process in the second embodiment, the positions of the measurement points P0C and the first point P1C opposite to the measurement points P0C are provided along the width direction of the pillow packaging bag 10, as shown in Fig. 3. The second point P2C and the return path are accordingly set.

By configuring the pillow packaging machine and the laser gas concentration measuring device 20 as described above, even when a liquid or powder or granular material accumulates in a lower portion of the packaging space 11 due to the action of gravity acting on the pillow packaging bag 10, the packaging space 11 can be secured in the upper portion of the packaging space 11 and free of the packaged material. Therefore, the optical path c of the laser light can be secured by setting the measurement points P0C in the packaging space 11. Therefore, as limited in the pillow packaging bag 10 in the third embodiment, the measurement can be easily performed without placing the packaged product containing liquid or powder in a tray, capsule, or the like.

According to the method for measuring the gas concentration of a pillow packaging bag in the fourth embodiment, the laser generator 21 and the laser receiver 22 of the laser gas concentration measuring device 20 are synchronized with or moved at the same moving speed as the conveying speed of the pillow packaging bag 10 conveyed by the conveyor or belt conveyor 18 of the vertical or horizontal pillow packaging machine.

As a result, the laser generator 21 and the laser receiver 22 are in a stationary state relative to the pillow packaging bag 10. This enables measurement over an extended period of time during the conveying process by emitting the laser light to the measurement points P0 provided on the pillow packaging bag 10, thereby improving the measurement accuracy in the concentration of the specific gas remaining in the packaging space 11 of the pillow packaging bag 10.

Furthermore, as shown in the above embodiment, the laser gas concentration measuring device 20 can be freely set in relation to the conveyance path 17 or 17a of the pillow packaging bag 10, and the laser generator 21 and the laser receiver 22 can be placed at an optimal position according to the layout of the pillow packaging machine to ensure a sufficient optical path length for measurement.

**Explanation of Reference Symbols**

| | | | |
|---|---|---|---|
| 1 | packaging material | 10 | pillow packaging bag |
| 11 | packaging space | 12 | first sealing portion |
| 13 | second sealing portion | 15 | horizontal sealing device |
| 16 | sealer | 17, 17a | conveyance path |
| 18 | belt conveyor | 18a | placement surface |
| 20 | laser gas concentrati on measuring device | | |
| 21 | laser generator | 22 | laser receiver |
| 23 | light source | 24 | control unit |
| 25 | light-receptive sensor | 26 | measuring unit |
| P0, P0 A, P0B, P0C | measurement point | | |
| P1, P1 1A, P1B, P1C | first point | | |
| P2, P2 2A, P2B, P2C | second point | | |

## Claims

1. A method for measuring gas concentration in multiple pillow packaging bags, the pillow packaging bags being formed by a pillow packaging machine, the pillow packaging machine including:
a vertical sealing device adapted for rolling widthwise a long film drawn from a film roll and for continuously sealing the overlapping ends to form multiple tubular packaging materials;
a conveying device provided with a conveyance path (17) and adapted for continuously conveying the packaging materials in a longitudinal direction at a predetermined conveying speed;
at least one horizontal sealing device (15) that includes a sealer (16) adapted for sealing each packaging material across a width thereof, the at least one horizontal sealing device (15) being configured for operating the sealer (16) intermittently at a predetermined cycle;
a filling device adapted for filling each packaging material with an article to be packaged; and
a gas replacement device adapted for replacing an atmosphere of the article filling each packaging material with a predetermined inert gas, the pillow packaging machine executing:
a first sealing step in which the sealer (16) seals the middle of each packaging material to form a first sealing section and forms a packaging space separated by the first sealing section;
a filling step of filling the packaging space with the packaged article fed from the filling device;
a gas replacement step of replacing an atmosphere in the packaging space filled with the packaged article with the inert gas; and
a second sealing step in which the sealer (16) seals the packaging space to form a second sealing section,
wherein the pillow packaging machine forms a series of pillow packaging bags in each of which the packaging space filled with the product to be packaged is sealed with the first and second seals,
wherein near the pillow packaging machine is provided a laser gas concentration measuring device (20) including a laser generator (21) adapted for emitting laser light of a specific wavelength into the packaging space and a laser receiver (22) adapted for receiving the laser light, the laser gas concentration measuring device (20) transmitting the laser light through the gas-replaced and sealed packaging space, thereby measuring the gas concentration of a specified gas remaining in the packaging space based on an absorption spectrum of the specified wavelength, the absorption spectrum changing before and after the transmission of the laser light through the packaging space,
wherein the laser gas concentration measuring device (20) executes:
a measurement device arranging step of arranging the laser generator (21) and the laser receiver (22) at a predetermined first point opposite to a measurement point provided on the pillow packaging bag formed at the second sealing step;
a gas concentration measuring step of emitting laser light to the measurement point while moving the laser generator (21) and the laser receiver (22) from the first point to a predetermined second point in parallel along a transport path at a predetermined moving speed, thereby measuring the gas concentration in the packaging space; and
a returning step of returning the laser generator (21) and the laser receiver (22) from the second point to the first point along a predetermined return path,
wherein during the gas concentration measurement step, while synchronizing the moving speed of the laser generator (21) and the laser receiver (22) with the conveying speed of the pillow packaging bag, the laser gas concentration measuring device (20) measures the gas concentration in the packaging space in accordance with the pillow packaging bag so that the laser generator (21) and the laser receiver (22) stop relative to the measurement point.

2. The method of claim 1, wherein the return path is arranged to draw a substantially U-shaped trajectory on the anti-conveyance path (17) side with the second point as a starting point and the first point as an ending point.

3. The method of claim 1 or 2, wherein the pillow packaging bags conveyed by the conveying device are formed from the packaging material to be interconnected and are continuous in a longitudinal direction.

4. The method of claim 1 or 2, wherein the pillow packaging bags conveyed by the conveying device are formed from the packaging material to be interconnected and are continuous in a transverse direction.

5. The method of claim 3 or 4, wherein the measurement point is provided along a width direction of the pillow packaging bag so that the laser light passes through the measurement point.

6. The method of claim 3 or 4, wherein the measurement point is provided along a thickness direction of the pillow packaging bag so that the laser light passes through the measurement point.

7. The method of claim 1, wherein the pillow packaging machine is provided with a discharge passage which is located near the pillow packaging machine and along which the pillow packaging bags formed by the pillow packaging machine are discharged, and the laser gas concentration measuring device (20) is located in the middle of the discharge passage outside the pillow packaging machine.

## Patentansprüche

1. Verfahren zum Messen einer Gaskonzentration in mehreren Kissenverpackungsbeuteln, wobei die Kissenverpackungsbeutel durch eine Kissenverpackungsmaschine gebildet werden, wobei die Kissenverpackungsmaschine Folgendes beinhaltet:
eine vertikale Versiegelungsvorrichtung, die zum Rollen eines langen Films, der von einer Filmrolle gezogen wird, und zum kontinuierlichen Versiegeln der überlappenden Enden, um mehrere rohrförmige Verpackungsmaterialien zu bilden, angepasst ist;
eine Fördervorrichtung, die mit einem Förderweg (17) versehen ist und zum kontinuierlichen Fördern der Verpackungsmaterialien in Längsrichtung mit einer vorbestimmten Fördergeschwindigkeit angepasst ist;
mindestens eine horizontale Versiegelungsvorrichtung (15), die einen Versiegler (16) beinhaltet, der zum Versiegeln von jedem Verpackungsmaterial über eine Breite davon angepasst ist, wobei die mindestens eine horizontale Versiegelungsvorrichtung (15) zum intermittierenden Betreiben des Versieglers (16) in einem vorbestimmten Zyklus konfiguriert ist;
eine Füllvorrichtung, die zum Füllen von jedem Verpackungsmaterial mit einem zu verpackenden Artikel angepasst ist; und
eine Gasersatzvorrichtung, die zum Ersetzen einer Atmosphäre des Artikels, der jedes Verpackungsmaterial füllt, durch ein vorbestimmtes Inertgas zu ersetzen, wobei die Kissenverpackungsmaschine Folgendes ausführt:
einen ersten Versiegelungsschritt, bei dem der Versiegler (16) die Mitte von jedem Verpackungsmaterial versiegelt, um einen ersten Versiegelungsabschnitt zu bilden und einen durch den ersten Versiegelungsabschnitt abgetrennten Verpackungsraum zu bilden;
einen Füllschritt eines Füllens des Verpackungsraums mit dem verpackten Artikel, der von der Füllvorrichtung zugeführt wird;
einen Gasersatzschritt eines Ersetzens einer Atmosphäre in dem Verpackungsraum, der mit dem verpackten Artikel gefüllt ist, durch das Inertgas; und
einen zweiten Versiegelungsschritt, bei dem der Versiegler (16) den Verpackungsraum versiegelt, um einen zweiten Versiegelungsabschnitt zu bilden,
wobei die Kissenverpackungsmaschine eine Reihe von Kissenverpackungsbeuteln bildet, wobei bei jedem der mit dem zu verpackenden Produkt gefüllte Verpackungsraum mit der ersten und zweiten Versiegelung versiegelt wird,
wobei in der Nähe der Kissenverpackungsmaschine eine Laser-Gaskonzentrationsmessvorrichtung (20) bereitgestellt ist, die einen Lasergenerator (21), der zum Emittieren von Laserlicht einer spezifischen Wellenlänge in den Verpackungsraum angepasst ist, und einen Laserempfänger (22), der zum Empfangen des Laserlichts angepasst ist, beinhaltet, wobei die Laser-Gaskonzentrationsmessvorrichtung (20) das Laserlicht durch den gasersetzten und versiegelten Verpackungsraum überträgt und dadurch die Gaskonzentration eines spezifizierten Gases, das in dem Verpackungsraum verbleibt, basierend auf einem Absorptionsspektrum der spezifizierten Wellenlänge misst, wobei sich das Absorptionsspektrum vor und nach der Übertragung des Laserlichts durch den Verpackungsraum ändert,
wobei die Laser-Gaskonzentrationsmessvorrichtung (20) Folgendes ausführt:
einen Messvorrichtung-Anordnungsschritt, bei dem der Lasergenerator (21) und der Laserempfänger (22) an einem vorbestimmten ersten Punkt gegenüber einem an dem in dem zweiten Versiegelungsschritt gebildeten Kissenverpackungsbeutel bereitgestellten Messpunkt angeordnet werden;
einen Gaskonzentrationsmessschritt, bei dem Laserlicht auf den Messpunkt emittiert wird, während der Lasergenerator (21) und der Laserempfänger (22) von dem ersten Punkt zu einem vorbestimmten zweiten Punkt parallel entlang eines Transportwegs mit einer vorbestimmten Bewegungsgeschwindigkeit bewegt werden, wodurch die Gaskonzentration in dem Verpackungsraum gemessen wird; und
einen Rückholschritt, bei dem der Lasergenerator (21) und der Laserempfänger (22) von dem zweiten Punkt zu dem ersten Punkt entlang eines vorbestimmten Rückholwegs zurückgeholt werden,
wobei während des Gaskonzentrationsmessschritts, während die Bewegungsgeschwindigkeit des Lasergenerators (21) und des Laserempfängers (22) mit der Fördergeschwindigkeit des Kissenverpackungsbeutels synchronisiert wird, die Laser-Gaskonzentrationsmessvorrichtung (20) die Gaskonzentration in dem Verpackungsraum entsprechend dem Kissenverpackungsbeutel misst, sodass der Lasergenerator (21) und der Laserempfänger (22) in Bezug auf den Messpunkt anhalten.

2. Verfahren nach Anspruch 1, wobei der Rückholweg angeordnet ist, um auf der Seite entgegen dem Förderweg (17) mit dem zweiten Punkt als Ausgangspunkt und dem ersten Punkt als Endpunkt eine im Wesentlichen U-förmige Bahn zu beschreiben.

3. Verfahren nach Anspruch 1 oder 2, wobei die durch die Fördervorrichtung geförderten Kissenverpackungsbeutel aus dem Verpackungsmaterial gebildet sind, das miteinander verbunden werden soll und in Längsrichtung kontinuierlich sind.

4. Verfahren nach Anspruch 1 oder 2, wobei die durch die Fördervorrichtung geförderten Kissenverpackungsbeutel aus dem Verpackungsmaterial gebildet sind, das miteinander verbunden werden soll und in Querrichtung kontinuierlich sind.

5. Verfahren nach Anspruch 3 oder 4, wobei der Messpunkt entlang einer Breitenrichtung des Kissenverpackungsbeutels bereitgestellt ist, sodass das Laserlicht durch den Messpunkt verläuft.

6. Verfahren nach Anspruch 3 oder 4, wobei der Messpunkt entlang einer Stärkerichtung des Kissenverpackungsbeutels bereitgestellt ist, sodass das Laserlicht durch den Messpunkt verläuft.

7. Verfahren nach Anspruch 1, wobei die Kissenverpackungsmaschine mit einem Ausgabedurchgang versehen ist, der sich in der Nähe der Kissenverpackungsmaschine befindet und entlang dessen die von der Kissenverpackungsmaschine gebildeten Kissenverpackungsbeutel ausgegeben werden, und wobei sich die Laser-Gaskonzentrationsmessvorrichtung (20) in der Mitte des Ausgabedurchgangs außerhalb der Kissenverpackungsmaschine befindet.

## Revendications

1. Procédé de mesure de la concentration de gaz dans de multiples sachets coussins, les sachets coussins étant formés par une machine d'emballage de sachets coussins, la machine d'emballage de sachets coussins comprenant :
un dispositif de scellement vertical adapté pour enrouler dans le sens de la largeur un long film tiré d'un rouleau de film et pour sceller en continu les extrémités qui se chevauchent afin de former de multiples matériaux d'emballage tubulaires ;
un dispositif de transport pourvu d'un trajet de transport (17) et adapté pour transporter en continu les matériaux d'emballage dans une direction longitudinale à une vitesse de transport prédéterminée ;
au moins un dispositif de scellement horizontal (15) qui comprend une scelleuse (16) adaptée pour sceller chaque matériau d'emballage sur une largeur de celui-ci, l'au moins un dispositif de scellement horizontal (15) étant configuré pour déclencher la scelleuse (16) de manière intermittente selon un cycle prédéterminé ;
un dispositif de remplissage adapté pour remplir chaque matériau d'emballage avec un article à emballer ; et
un dispositif de remplacement de gaz adapté pour remplacer une atmosphère de l'article qui remplit chaque matériau d'emballage par un gaz inerte prédéterminé, la machine d'emballage de sachets coussins exécutant :
une première étape de scellement lors de laquelle la scelleuse (16) scelle le milieu de chaque matériau d'emballage afin de former une première section de scellement et forme un espace d'emballage séparé par la première section de scellement ;
une étape de remplissage qui consiste à remplir l'espace d'emballage avec l'article emballé fourni par le dispositif de remplissage ;
une étape de remplacement de gaz qui consiste à remplacer une atmosphère dans l'espace d'emballage rempli avec l'article emballé par le gaz inerte ; et
une deuxième étape de scellement lors de laquelle la scelleuse (16) scelle l'espace d'emballage afin de former une deuxième section de scellement,
dans lequel la machine d'emballage de sachets coussins forme une série de de sachets coussins dans chacun desquels l'espace d'emballage rempli avec le produit à emballer est scellé avec le premier et le deuxième scellements,
dans lequel à proximité de la machine d'emballage de sachets coussins est prévu un dispositif de mesure de concentration de gaz par laser (20) comprenant un générateur laser (21) adapté pour émettre une lumière laser d'une longueur d'onde spécifique dans l'espace d'emballage et un récepteur laser (22) adapté pour recevoir la lumière laser, le dispositif de mesure de concentration de gaz par laser (20) transmettant la lumière laser à travers l'espace d'emballage à gaz remplacé et scellé, afin de mesurer la concentration de gaz d'un gaz spécifié qui reste dans l'espace d'emballage sur la base d'un spectre d'absorption de la longueur d'onde spécifiée, le spectre d'absorption changeant avant et après la transmission de la lumière laser à travers l'espace d'emballage,
dans lequel le dispositif de mesure de concentration de gaz par laser (20) exécute :
une étape de positionnement du dispositif de mesure qui consiste à positionner le générateur laser (21) et le récepteur laser (22) à un premier point prédéterminé opposé à un point de mesure prévu sur le sachet coussin formé à la deuxième étape de scellement ;
une étape de mesure de concentration de gaz qui consiste à émettre la lumière laser vers le point de mesure tout en déplaçant le générateur laser (21) et le récepteur laser (22) du premier point vers un deuxième point prédéterminé en parallèle le long d'un trajet de transport à une vitesse de déplacement prédéterminée, afin de mesurer la concentration de gaz dans l'espace d'emballage ; et
une étape de renvoi qui consiste à renvoyer le générateur laser (21) et le récepteur laser (22) du deuxième point vers le premier point le long d'un trajet de retour prédéterminé,
dans lequel, pendant l'étape de mesure de concentration de gaz, tout en synchronisant la vitesse de déplacement du générateur laser (21) et du récepteur laser (22) avec la vitesse de transport du sachet coussin, le dispositif de mesure de concentration de gaz par laser (20) mesure la concentration de gaz dans l'espace d'emballage en fonction du sachet coussin de sorte que le générateur laser (21) et le récepteur laser (22) s'arrêtent par rapport au point de mesure.

2. Procédé selon la revendication 1, dans lequel le trajet de retour est prévu de manière à dessiner une trajectoire sensiblement en forme de U sur le côté opposé au trajet de transport (17), le deuxième point servant de point de départ et le premier point servant de point d'arrivée.

3. Procédé selon la revendication 1 ou 2, dans lequel les sachets coussins transportés par le dispositif de transport sont formés à partir du matériau d'emballage afin d'être interconnectés et sont continus dans une direction longitudinale.

4. Procédé selon la revendication 1 ou 2, dans lequel les sachets coussins transportés par le dispositif de transport sont formés à partir du matériau d'emballage afin d'être interconnectés et sont continus dans une direction transversale.

5. Procédé selon la revendication 3 ou 4, dans lequel le point de mesure est prévu le long d'une direction de largeur du sachet coussin de sorte que la lumière laser passe par le point de mesure.

6. Procédé selon la revendication 3 ou 4, dans lequel le point de mesure est prévu le long d'une direction d'épaisseur du sachet coussin de sorte que la lumière laser passe par le point de mesure.

7. Procédé selon la revendication 1, dans lequel la machine d'emballage de sachets coussins est pourvue d'un passage d'évacuation situé à proximité de la machine d'emballage de sachets coussins et le long duquel les sacs d'emballage de sachets coussins formés par la machine d'emballage de sachets coussins sont évacués, et le dispositif de mesure de concentration de gaz par laser (20) est situé au milieu du passage d'évacuation à l'extérieur de la machine d'emballage de sachets coussins.
